# EUROPÄISCHE PATENTSCHRIFT

(11) **EP 1 085 293 B1**
(45) Veröffentlichungstag und Bekanntmachung des Hinweises auf die Patenterteilung: **30.08.2006**
(21) Anmeldenummer: 00119755.7
(22) Anmeldetag: 11.09.2000
(51) Int. Cl.: G01B 21/04, G01B 5/012

(54) **Vorrichtung zum Einmessen von Parametern an CNC-Bearbeitungsmaschinen**
Procedure to determine parameters on CNC-machines
Procédure de détermination de paramètres de machines-CNC

(30) Priorität: 16.09.1999 DE 19944429
(43) Veröffentlichungstag der Anmeldung: 21.03.2001
(73) Patentinhaber: Petec GmbH, 63839 Kleinwallstadt (DE)
(72) Erfinder: Peick, Boris, 63839 Kleinwallstadt (DE)
(74) Vertreter: Küchler, Stefan

(56) Entgegenhaltungen:
- WO-A-89/11631
- DE-A- 4 221 166
- DE-A- 4 407 605
- DE-U- 29 916 325
- "TEST FIXTURE FOR MEASURING ROBOT REPEATABILITY/ACCURACY" IBM TECHNICAL DISCLOSURE BULLETIN, IBM CORP. NEW YORK, US, Bd. 31, Nr. 6, 1. November 1988 (1988-11-01), Seiten 457-460, XP000050821 ISSN: 0018-8689

## Beschreibung

Die Erfindung richtet sich auf eine Vorrichtung zum Ermitteln von Korrekturparametern für die Werkzeug-Koordinaten von CNC-gesteuerten Bearbeitungsmaschinen.

Wie beispielsweise in dem "Techniker-Handbuch" von Alfred Böge, 13. Auflage 1992, Seiten 1531 ff. beschrieben, ist es für eine Wiederholgenauigkeit der Bearbeitung von Werkstücken von beispielsweise 1/1000 mm erforderlich, die exakte Position des Werkzeugs gegenüber dem Werkstück zu kennen. Dies wird üblicherweise dadurch realisiert, daß eine Reihe von Bezugspunkten festgelegt wird. Hierbei ist zunächst der Maschinennullpunkt M zu nennen, der den Ursprung des Koordinatensystems der gesamten Werkzeugmaschine bildet, ferner der Referenzpunkt R, der jederzeit in allen drei Achsen anfahrbar ist und zur "Nullung" der Wegmeßsysteme benötigt wird, weiterhin ein oder mehrere Werkstücknullpunkte W, welche je einem werkstückbezogenen Koordinatensystem zugeordnet sind, ein Programmnullpunkt P0, der zu Beginn eines CNC-Programms angefahren wird und somit den Werkzeugstandort vor Beginn der Bearbeitung darstellt, Hilfspunkte HP, die bei besonders schwierig zu bearbeitenden Werkstücken zwischenzeitlich angefahren werden, um definierte Ausgangspositionen für weitere Aktionen zu erhalten, ein Werkzeugwechselpunkt WWP, an welchem ein Wechsel des Werkzeugs stattfindet, schließlich Spannmittelnullpunkte F in der Anschlagebene des Werkstückes an einem Spannmittel und Werkzeugbezugspunkte WZ zur Definition eines Bezugs zwischen dem Werkzeug und dem Werkzeugträger.

Darüber hinaus können bei Werkzeugmaschinen die betreffenden Referenzpunkte in unterschiedlicher Weise angefahren werden, d. h. die Längsachse des Werkzeugs kann beim Anfahren an einen Punkt parallel zur X-, zur Y- oder zur Z-Achse ausgerichtet sein. Diese verschiedenen Drehstellungen können bei unterschiedlichen Maschinen auf verschiedenen Wegen realisiert sein, denn die verschiedenen Schwenkachsen, um die eine Werkzeughalterung verschwenkt wird, können entweder senkrecht zueinander orientiert sein, oder aber auch Winkel von beispielsweise 45° einschließen. Aufgrund der Vielzahl von Bewegungsmöglichkeiten der Werkzeughalterung können minimale Fehlstellungen der chassisseitigen Gelenke zu merklichen Abweichungen zwischen den Stellungsistwerten und den vorgegebenen Sollwerten führen, weshalb meistens an einer Vielzahl von Bezugspunkten in jeweils wenigstens drei unterschiedlichen Drehstellungen der Werkzeughalterung in regelmäßigen Zeitabständen Korrekturmessungen durchgeführt werden, um durch Verschleiß, Abbau von inneren Spannungen oder Temperaturänderungen hervorgerufene Veränderungen der Istwerte zu kompensieren.

Hierzu wird üblicherweise ein gewünschter Bezugspunkt angefahren und sodann bei der jeweiligen Drehstellung eine Messung mit einem Meßtaster aus drei unterschiedlichen Raumrichtungen durchgeführt, um Korrekturwerte für die X-, Y- und Z-Koordinaten, bezogen auf den betreffenden Bezugspunkt und die jeweilige Werkzeugaufnahmedrehstellung, festzulegen und im Speicher der CNC-Werkzeugmaschine festzuhalten. Dieses Verfahren ist äußerst zeitaufwendig, da einerseits die Vorgabe der Drehstellung und das Anfahren der betreffenden Position manuell angewählt werden muß, andererseits muß der Meßtaster plaziert und der Meßwert abgelesen und eingegeben werden.

Zur Vereinfachung dieses Verfahrens ist in der europäischen Offenlegungsschrift 786 644 eine Meßanordnung vorgeschlagen worden, wobei an einer Maschinenspindel anstelle eines Werkzeugs ein Arm angeordnet werden kann, der an seinem freien Ende eine Kugel trägt. An dem Maschinentisch wird ein zylindrisches Element festgelegt, beispielsweise mittels Magneten, welches ebenfalls an dem freien Ende eines Auslegers eine Kugel aufweist. Zwischen den beiden Kugeln erstreckt sich ein teleskopisch ausziehbarer Arm, der einen Meßwertaufnehmer für die Auszugslänge des Teleskops enthält. Wird nun die in der Spindel eingesetzte Meßanordnung derart verfahren, daß die am freien Ende des Auslegerarms angeordnete Kugel einen Kreis um die andere, am Maschinentisch verankerte Meßkugel beschreibt, so können Abweichungen des Abstandes zwischen den beiden Kugeln registriert werden. Mit dieser Anordnung ist jedoch eine Positionsbestimmung der beweglichen Meßkugel ausschließlich in einer einzigen Raumrichtung möglich, die Position in den jeweils anderen, dazu orthogonalen Richtungen bleibt von der Positioniergenauigkeit des Werkzeugarms abhängig, und sofern hier Abweichungen auftreten, so bleiben dieselben unerkannt, was zu einer Verfälschung des Meßergebnisses bezogen auf die drei Raumrichtungen X, Y und Z bedeutet. Insofern muß diese vorbekannte Anordnung als untauglich zur exakten Bestimmung von Korrekturparametern für die X-, Y- und Z-Koordinaten angesehen werden.

Hier bringt auch die Anordnung nach der deutschen Offenlegungsschrift 44 07 605 keine ausreichende Verbesserung. Aus dieser Druckschrift ist es bekannt, einen vorzugsweise würfelförmigen Eichkörper beispielsweise an einem Maschinentisch oder dergleichen festzulegen. Dieser Eichkörper kann sodann mittels eines glockenförmigen Pendants, welches an einer in den drei Raumkoordinaten verschiebbaren Pinole angeordnet ist, ausgemessen werden. Dieses glockenförmige Pendant ist durch drei zueinander lotrechte Flächen gebildet, die sich in einer gemeinsamen Ecke treffen. An diesen Referenzflächen sind insgesamt sechs Sensoren angeordnet, welche erforderlich sind, um Position und Lage des glockenförmigen Meßkörpers gegenüber dem Eichkörper zu bestimmen zu können. Aufgrund der Vielzahl erforderlicher Sensoren ist diese Anordnung äußerst aufwendig und daher unwirtschaftlich.

Das Dokument "Test fixture for measuring robot repeatability/accuracy", 700 IBM Technical Disclosure Bulletin 31 (1988) Nov., No. 6, Armonk, NY, USA, Seiten 457-460, offenbart eine Korrekturvorrichtung für Roboter für automatisierte Bearbeitung. Die Vorrichtung hat einen in den Griff des Roboters einsetzbaren Meßkopf mit Meßkugeln. Der Meßkopf betätigt Meßtaster, die in unterschiedlichen orthogonalen Meßrichtungen orientiert sind.

Aus den Nachteilen des bekannten Stands der Technik resultiert das die Erfindung initiierende Problem, eine gattungsgemäße Vorrichtung zum Ermitteln von Korrekturparametern für die Werkzeugkoordinaten von CNC-gesteuerten Bearbeitungsmaschinen derart weiterzubilden, daß Korrekturparameter für die Position eines Werkzeugs mit einem vertretbaren Meß- und Konstruktionsaufwand und gleichzeitig mit einer ausreichender Genauigkeit ermittelt werden können.

Die Lösung diese Problems gelingt bei einer gattungsgemäßen Vorrichtung durch Merkmalskombination gemäß Anspruch 1.

Die Erfindung verwendet anstelle eines glockenförmigen Referenzkörpers, wie er aus der DE-OS 44 07 605 bekannt ist, einen Meßkopf mit einer Meßkugel, die mit einem Einsatz zum Einstecken in die Werkzeugaufnahme der betreffenden Maschine verbunden ist. Im Gegensatz zu der Anordnung nach der EP 786 644 wird an einem Maschinentisch, -bett oder dergleichen eine Meßeinrichtung festgelegt, welche insgesamt drei Meßtaster zur Anlage an der Meßkugel aufweist, wobei die Meßtaster in jeweils unterschiedlichen Raumrichtungen orientiert sind. Somit können mit der Erfindung stets drei Meßwerte ohne Veränderung der Meßanordnung ermittelt werden, aus den sodann - beispielsweise anhand trigonometrischer Beziehungen - die gewünschten Korrekturwerte für die X-, Y- und Z-Koordinaten errechnet werden können. Somit kann der Aufwand zur Ermittlung der gewünschten Korrekturwerte gegenüber der manuellen Meßmethode etwa auf ein Drittel gesenkt werden. Trotz eines vertretbaren Konstruktionsaufwands liefert die Erfindung dabei optimale Meßergebnisse, da eine Abweichung des Positionsistwertes von dem -sollwert in jeder beliebigen Raumrichtung einwandfrei erkannt wird.

Erfindungsgemäß sollten die Meßrichtungen wenigstens zweier Meßtaster einen spitzen Winkel untereinander einschließen. Die Meßrichtungen der Meßtaster schneiden sich vorzugsweise in einem Punkt, in welchem bei einer richtigen Positionierung des Werkzeugarms sich der Mittelpunkt der Kugel des in die Werkzeugaufnahme eingesetzten Meßkopfs befindet. Sofern wenigstens zwei derartige Meßrichtungen einen spitzen Winkel miteinander einschließen, so wird der Kugelmittelpunkt von der Meßanordnung nur an einer Fläche von etwa 1/16 der Kugelsphäre umgeben, so daß es wenig Programmieraufwand bedarf, um den Werkzeugarm mit dem in dessen Aufnahme eingesetzten Meßkopf an die gewünschte Position heranzufahren, ohne dabei die Meßanordnung zu beschädigen. Die Winkelstellung zwischen den betreffenden Meßtastern kann über trigonometrische Beziehungen in die entsprechenden Positions- oder Kompensationswerte orthogonaler Koordinaten X, Y, Z umgesetzt werden.

Es hat sich als günstig erwiesen, daß die Meßkugel aus gehärtetem Metall besteht. Eine Härtung der Metallkugel verleiht derselben eine hohe Formstabilität, so daß höchst präzise Meßergebnisse erzielt werden können. Andererseits stellt die Härtung der Meßkugel einen Schutz für dieselbe dar, so dass selbst bei einer unsachgemäßen Handhabung beispielsweise infolge einer Fehlbedienung der CNC-Werkzeugmaschine eine Beschädigung derselben nicht zu befürchten ist.

Es liegt im Rahmen der Erfindung, daß die Meßkugel eine radial gerichtete, querschnittlich vorzugsweise zylindrische Ausnehmung zum Einsetzen eines Tragbolzens aufweist. Ein derartiger Tragbolzen schafft einen definierten Übergang von der gleichmäßig gewölbten Meßkugel zu dem vorzugsweise konisch geformten Werkzeugeinsatz, welcher mit der Werkzeugaufnahme der CNC-Maschine korrespondiert. Hierbei kann die Längsachse des Tragbolzens vorzugsweise koaxial zu der Symmetrieachse des Einsatzkonus' ausgerichtet werden, bevor oder während der Tragbolzen an dem Einsatz fixiert wird. Sofern der Querschnitt des Tragbolzens näherungsweise mit dem Querschnitt der Ausnehmung übereinstimmt, so kann dieser mit geringstem Spiel in die betreffende Ausnehmung eingesetzt werden, und mit guter

Näherung liegt daher der Mittelpunkt der Meßkugel auf der Längsachse des Tragbolzens. Hierzu ist es erforderlich, daß gleichzeitig auch die Ausnehmung exakt radial bezüglich der Meßkugel verläuft. Sofern die Meßkugel aus gehärtetem Metall besteht, stellt die Erodierung die einzige Möglichkeit zum Einbringen der radialen Ausnehmung in die Meßkugel dar.

Die Erfindung läßt sich dahingehend weiterbilden, daß der Tragbolzen in die radiale Ausnehmung der Meßkugel eingeklebt ist. Eine derartige Verbindung kann besonders dauerhaft und stabil ausgeführt werden, ohne die beteiligten Elemente der Gefahr von Formveränderungen oder inneren Spannungen auszusetzen.

Um trotz eines Klebstoffauftrags den Tragbolzen in die Ausnehmung der Meßkugel einführen zu können, muß für einen minimalen Luftspalt zwischen diesen Elementen Sorge getragen werden, so daß eine hundertprozentig exakte Ausrichtung nicht erreicht werden kann. Deshalb ist erfindungsgemäß vorgesehen, daß zwischen der Meßkugel bzw. dem Tragbolzen und dem in die Werkzeugaufnahme einsetzbaren Ende des Meßkopfs eine Justiervorrichtung angeordnet ist. Da mit dieser Justiervorrichtung die nach dem Zusammenkleben von Kugel und Tragbolzen noch verbleibende, minimale Radialversetzung zwischen der Meßkugel und der Längsachse des Meßkopfs kompensiert werden muß, sollte die Justiervorrichtung einen radialen Bewegungsfreiheitsgrad aufweisen.

Im Rahmen der oben beschriebenen Justiervorrichtung ist vorzugsweise eine lösbare Verbindung zwischen Meß- und Einsatzende des Meßkopfs vorgesehen. Indem diese Verbindung gelockert wird, kann eine radiale Relativverstellung und damit eine Justierung der Meßkugel gegenüber dem Einsatzende des Meßkopfs vorgenommen werden.

Eine vorteilhafte Weiterbildung der Justiervorrichtung zeichnet sich dadurch aus, daß an einem der beide Teile des Meßkopfs eine zentrale Ausnehmung und an dem anderen Teil ein zentraler Fortsatz vorgesehen ist. Diese Teile erlauben durch einfaches Zusammenstecken eine Grobjustierung zwischen den betreffenden Elementen.

Die Erfindung sieht weiterhin vor, daß zwischen der zentralen Ausnehmung und dem zentralen Fortsatz ein Ringspalt vorhanden ist, der eine begrenzte, radiale Verschiebung der beiden Teile erlaubt. Die Stärke dieses Ringspalts braucht nicht viel größer zu sein als das maximale Spiel zwischen der Ausnehmung in der Meßkugel und dem in dieselbe eingesetzten Tragbolzen, so daß eine dadurch verursachte Exzentrizität ausgeglichen werden kann.

Weitere Vorteile lassen sich erzielen, wenn in dem die zentrale Ausnehmung umgebenden Ring radiale Gewindebohrungen zum Einschrauben von Stellschrauben vorgesehen sind, die in der Lage sind, gegen die Mantelfläche des zentralen Fortsatzes zu drücken, um eine Relativverstellung zu bewirken. Diese Stellschrauben sind in der Lage, niedrige Betätigungsdrehmomente in große Verstellkräfte umzusetzen, so daß ein Lösen der Verbindung zwischen den beiden Enden des Meßkopfs nicht erforderlich ist, um eine exakte Justierung vorzunehmen. Dies hat den Vorteil, daß die Justiervorrichtung in jeder Position selbstarretierend ist, so daß minimale Relativverschiebungen vorgenommen werden können.

Die maschinenseitige Meßanordnung kann aufgrund der obigen Umrechnungsmöglichkeit ohne weiteres räumlich dadurch komprimiert werden, daß die beiden Meßtaster einen spitzen Winkel von etwa 45° untereinander einschließen. Um drei linear voneinander unabhängige Meßwerte zu erhalten, sollte beachtet werden, daß die Meßrichtung des dritten Meßtasters außerhalb der durch die übrigen beiden Meßrichtungen aufgespannten Ebene liegt. Bevorzugt wird dabei eine Anordnung, wobei die Meßrichtung des dritten Meßtasters mit der von den übrigen beiden Meßrichtungen ausgespannten Ebene ebenfalls einen Winkel von etwa 45° einschließt. Solchenfalls erhalten die drei Meßrichtungen einen hohen Grad an Konvergenz, und das von den drei Meßtastern aufgespannte Dreieck umgibt den Mittelpunkt der richtig plazierten Meßkugel nur in einem Bereich von etwa 3 % der betreffenden Kugelfläche, so daß für den Meßkopf eine große Manövrierfreiheit zur Verfügung steht und die Beschädigung der Meßtaster durch eine ungeschickte Betätigung der CNC-Maschine weitgehend ausgeschlossen ist.

Wie oben ausgeführt, kann durch die vielfältigsten Einflüsse eine Fehlplazierung des Werkzeugarms und damit der an dessen Aufnahme angeordneten Meßkugel verursacht sein. Damit auch bei einer Versetzung um einige Millimeter exakte Meßwerte an den Meßtastern erzeugt werden, sieht die Erfindung weiterhin vor, daß dieselben verbreiterte, vorzugsweise tellerartige Meßköpfe aufweisen, deren Vorderseiten lotrecht zur jeweiligen Meßrichtungen orientiert sind. Derartige, tellerförmig verbreiterte Meßköpfe sind in der Lage, den betreffenden Abstand zu der Meßkugeloberfläche auch dann noch exakt zu ermitteln, wenn dieselbe um nicht mehr als den Tellerradius von der Sollposition abweicht. Beispielsweise können bei einem Tellerradius von 5 mm noch Abweichungen der Meßkugel von ihrer Sollposition von etwa 4,8 mm toleriert werden.

Um eine optimale Anlage der tellerartigen Meßköpfe der Meßtaster an der Meßkugeloberfläche sicherzustellen, sollten die Tastelemente der Meßtaster gegen rückstellende Federkräfte aus ihrer Nullposition auslenkbar ausgebildet sein. Dadurch ist eine bspw. formschlüssige Kopplung der Tastelemente mit der Meßkugel nicht erforderlich, vielmehr werden die Tastelemente mit ihren Köpfen stets gegen die Oberfläche der Meßkugel gepreßt, sobald sich diese in dem Bewegungsbereich der Meßtaster befindet. Da eine Kopplung mit der Meßkugel nicht erforderlich ist, kann der Meßkopf aus nahezu jeder Richtung an die Meßtaster herangefahren werden, was den Arbeitsaufwand zur Ermittlung von Korrekturparametern erheblich reduziert.

Bei einer ersten Ausführungsform können die Meßtaster mit je einer mechanischen Meßuhr gekoppelt sein, an der die momentane Auslenkung exakt abgelesen werden kann.

Daneben ist eine weitere Ausführungsform der Meßtaster mit einem mechanisch-elektrischen Wandler möglich, der ein zu der Auslenkung proportionales, elektrisches Signal erzeugt. Dieses Signal kann entweder an einem digitalen Anzeigeelement sichtbar gemacht werden, oder die elektrischen Meßtastersignale werden mit elektrischen Eingängen des Steuercomputers der betreffenden Werkzeugmaschine gekoppelt, so daß die gewonnenen Meßergebnisse direkt eingespeichert und sodann als Kompensationswerte verwendet werden können.

Die Erfindung läßt sich dahingehend weiterbilden, daß die Meßtaster an einem gemeinsamen Tragelement angeordnet sind. Hierdurch ist es möglich, durch Ausrichtung dieses einzigen Tragelements alle drei Meßtaster gleichzeitig zu justieren, so daß die Einstellarbeiten weiter reduziert werden können. Sodann kann in der betreffenden Position der Meßkopf unter drei verschiedenen Drehstellungen positioniert werden, beispielsweise parallel zur X-, Y- und Z-Achse, wobei das die Meßtaster tragende Element nicht verändert werden muß. Wo früher eine Vielzahl von manuellen Einzelmessungen erforderlich waren, kann nun mit der erfindungsgemäßen Vorrichtung der Aufwand auf die Justierung des gemeinsamen Tragelements reduziert werden, so daß die Eichung bzw. Ermittlung von Kompensationswerten in einem Bruchteil der früher hierfür benötigten Zeit durchgeführt werden kann.

Die Erfindung sieht weiterhin vor, daß das Tragelement über eine Säule od. dgl. mit dem Maschinentisch, -bett od. dgl. verbindbar ist. Mit einer derartigen Säule wird der Bezugspunkt nach oben und von dem Maschinentisch weg verlegt, wo bei der Positionierung des Werkzeugarms allenfalls auf die Säule und das Tragelement selbst Rücksicht genommen werden muß, so daß das Anfahren mit einem geringstmöglichen Programmieraufwand möglich ist.

Sofern die Säule aus mehreren aneinandersetzbaren Säulenstücken besteht, kann die Gesamtlänge an unterschiedliche Höhen der Bezugspunkte angepaßt werden. In vielen Fällen können die Bezugspunkte derart gelegt werden, daß eine stufige Höhenverstellung der Meßeinrichtung ausreichend ist. Für besondere Fälle kann auch ein teleskopisch kontinuierlich verstellbares Säulenelement vorgesehen sein.

Ein wichtiges Merkmal der Erfindung ist, daß die Säulenteile unverdrehbar und in Axialrichtung unverschiebbar aneinander festlegbar sind. Hierdurch ist es möglich, eine definierte Ausrichtung des Säulensockels gegenüber dem Maschinentisch ohne Versetzung und Verdrehung bis zu dem obersten Säulenelement und damit bis zu der Meßeinrichtung zu transferieren, so daß dieselbe mit wenigen Handgriffen justiert werden kann.

Um den Säulensockel und damit die gesamte Säule möglichst lotrecht gegenüber dem Maschinentisch oder -bett auszurichten, sind an dem Säulenfuß bevorzugt etwa radial auskragende Flügel mit horizontalen Aufstandsflächen vorgesehen. Für eine einwandfreie Ausrichtung sind bereits drei derartige Standflügel ausreichend, bei hinreichend genauer Bearbeitung der Aufstandsflächen können jedoch auch mehr, beispielsweise vier Standflügel verwendet werden.

Der Fixierung des Säulensockels dient eine Klemmeinrichtung, welche ein hinterschnittenes Element aufweist, das zusammen mit den Aufstandsflächen der radial auskragenden Flügel in der Lage ist, einen Teil des Maschinenbettes zu umgreifen.

Schließlich entspricht es der Lehre der Erfindung, daß die Klemmeinrichtung ein in eine Befestigungsnut des Maschinentisches, -bettes oder dergleichen einsetz- oder - legbares Element aufweist. Hierbei kann es sich beispielsweise um einen Nutstein mit einer Gewindebohrung handeln, in welche eine Schraube eindrehbar ist, deren Kopf nach innen vorspringende Fortsätze der Flügel übergreift und dadurch eine Verklemmung der Standflügel mit der Oberseite des Maschinenbettes bewirkt.

Weitere Merkmale, Eigenschaften, Vorteile und Wirkungen auf der Basis der Erfindung ergeben sich aus der nachfolgenden Beschreibung bevorzugter Ausführungsformen der Erfindung sowie anhand der Zeichnung. Hierbei zeigt:

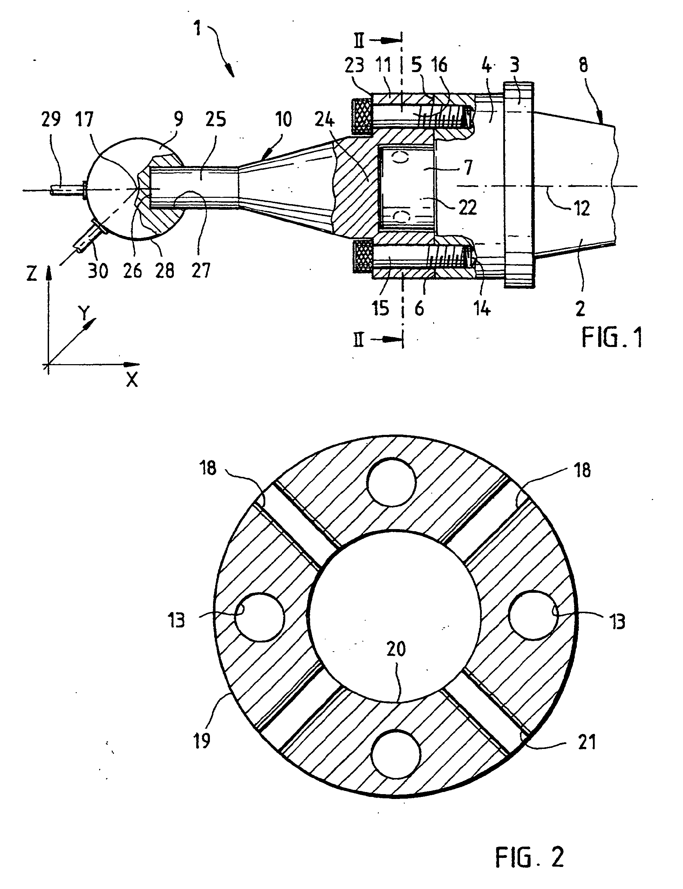

- Fig. 1: eine Seitenansicht des in eine Aufnahme des Werkzeugarms einsetzbaren Meßkopfes, teilweise aufgeschnitten;
- Fig. 2: einen Schnitt durch die Figur 1 entlang der Linie II-II;
- Fig. 3: eine Gesamtansicht einer erfindungsgemäßen Säule mit einem drei Meßtaster tragenden Arm;
- Fig. 4: eine Ansicht der Unterseite eines Säulenstücks der Anordnung aus Fig. 3,
- Fig. 5: eine Ansicht der Oberseite des unteren oder mittleren Säulenstücks der Anordnung nach Fig. 3,
- Fig. 6: das Detail VI aus Fig. 3 in einer vergrößerten, perspektivischen Darstellung; sowie
- Fig. 7: eine andere Ausführungsform des obersten Säulenelements aus Fig. 3.

Der erfindungsgemäße Meßkopf 1 verfügt über einen rückwärtigen, konusförmigen Einsatz zum Einstecken in die Werkzeugaufnahme einer nicht dargestellten Werkzeugmaschine. Der Konus 2 endet an seinem vorderen, querschnittlich verbreiterten Ende in einem Bund 3, an den sich ein zylindrischer Bereich 4 etwas geringeren Querschnitts anschließt. An dessen vorderer Stirnseite 5 befindet sich eine rundumlaufende, schulterartige Absetzung 6, welche einen ebenfalls zylindrischen Fortsatz 7 verjüngten Querschnitts umschließt.

An dieser Einsatz-Baugruppe 8 ist eine die Meßkugel 9 tragende Baugruppe 10 lösbar festgelegt. Diese Meßkugel-Baugruppe 10 verfügt an ihrem rückwärtigen Ende über ein ringförmiges Element 11, dessen Außendurchmesser etwa dem Durchmesser des zylindrischen Bereichs 4 entspricht, während der Innendurchmesser des Ringelements 11 geringfügig größer ist als der Außendurchmesser des querschnittlich verjüngten Fortsatzes 7 an der Einsatz-Baugruppe 8. Dieses Ringelement 11 weist vier zur Längsachse 12 des Meßkopfs 1 parallele Bohrungen 13 auf, die mit je einer Sacklochbohrung 14 in der Stirnseite 5 des zylindrischen Bereichs 4 der Einsatz-Baugruppe 8 in eine Flucht verbringbar sind. Während die Sacklochbohrungen 14 mit einem Innengewinde zum Eindrehen von Schrauben 15 versehen sind, ist der Querschnitt der Durchgangsbohrungen 13 in dem ringförmigen Bereich 11 der Meßkugel-Baugruppe 10 etwas größer als der Schaft 16 der Schrauben 15, so daß das Ringelement 11 eine geringförmige, radiale Bewegungsfreiheit in Bezug auf die Längsachse 12 aufweist.

Diese Verstellbarkeit kann dazu verwendet werden, um die Meßkugel-Baugruppe 10 und damit die Meßkugel 9 gegenüber der Einsatz-Baugruppe 8 derart zu justieren, daß der Mittelpunkt 17 der Meßkugel 9 sich exakt auf der Längsachse 12 der Einsatz-Baugruppe 8 befindet. Diesem Zweck dienen vier radiale Bohrungen 18 in dem Ringelement 11, welche dieses von seiner Außenseite 19 bis zu der konzentrischen Ausnehmung 20 durchsetzen und mit einem Innengewinde 21 versehen sind. In diese Gewindebohrungen 18 können von der Außenseite 19 her Stellschrauben eingeschraubt werden, welche sich schließlich mit ihrer vorderen Stirnseite auf der Mantelfläche 22 des Fortsatzes 7 abstützen. Indem nun bestimmte der Stellschrauben weiter angezogen werden, stoßen sie das Ringelement 11 in dem betreffenden Bereich von dem Fortsatz 7 ab und führen zu einer exzentrischen Verlagerung desselben, mit der eine entgegengesetzte Exzentrizität der Meßkugel 9 ausgeglichen werden kann. Auf diesem Weg ist eine Radialverstellung zwischen Trag-Baugruppe 10 und Einsatz-Baugruppe 8 sogar ohne Lösen der Befestigungsschrauben 15 möglich.

An der Vorderseite 23 des Ringelements 11 schließt sich zunächst ein axialer Fortsatz 24 verringerten Querschnitts an, der von einer weiteren Schulter umgeben ist, auf der die Köpfe der Befestigungsschrauben 15 zur Anlage gelangen. Dieser zylindrische Bereich 24 verjüngt sich im weiteren Verlauf der Meßkugel-Baugruppe 10 und geht schließlich in einen zylindrischen Tragbolzen 25 über, der einen Querschnitt von beispielsweise 1 cm bis 3 cm aufweist.

Auf der freien Stirnseite 26 dieses Tragbolzens 25 ist die Meßkugel 9 befestigt, die zu diesem Zweck ein querschnittlich zylindrisches Sackloch 27 aufweist, dessen Querschnitt nur minimal größer ist als der Querschnitt des Tragbolzens 25. Die Sacklochbohrung 27 hat beispielsweise eine Tiefe von 1 bis 2 cm. Zur Fixierung der Meßkugel 9 wird eine geringe Menge eines Klebstoffs verwendet, die an den Innenseiten des Sacklochs 27 verteilt wird und nach Aufschieben der Meßkugel 9 auf den Tragbolzen 25 aushärtet.

Während die Einsatz-Baugruppe 8 und auch die Meßkugel-Baugruppe 10 in ihrem Bereich von dem Ringelement 11 bis zu dem Tragbolzen 25 als Drehteile beispielsweise aus rostfreiem Edelstahl oder aus einem anderen Metall gefertigt sein können, sollte die Meßkugel 9 zusätzlich gehärtet sein, zumindest eine Oberflächenhärtung aufweisen. Der Grund liegt darin, daß nahezu die gesamte Oberfläche 28 der Meßkugel 9 mit Ausnahme der Sacklochbohrung 27 als Anlagefläche für Meßtaster 29, 30 dienen kann, so daß hier bereits kleinste Verformungen, wie sie bei einem kleinen Stoß gegen ein hartes Hindernis auftreten können, zu einer Beeinträchtigung der späteren Meßergebnisse führen könnten.

Sofern - wie die Erfindung weiterhin vorsieht - die Sacklochbohrung 27 nach Drehen und Härten der Meßkugel 9 angebracht wird, so muß dies mit einem geeigneten Bearbeitungsverfahren, beispielsweise durch Erodieren, erfolgen.

Nach dem Einkleben des Tragbolzens 25 in die Sacklochbohrung 27 der Meßkugel 9 ist dieselbe mit der Meßkugel-Baugruppe 10 unlösbar verbunden. Da andererseits das Einkleben ein geringes Spiel zwischen Tragbolzen 25 und Ausnehmung 27 erfordert, kann die Meßkugel 9 hierbei geringfügig außerhalb der Längsachse des Tragbolzens 25 positioniert worden sein. Dies läßt sich jedoch anschließend mit den in die radialen Gewindeausnehmungen 18 eingeschraubten Stellschrauben vollständig kompensieren, indem die gesamte Meßkugel-Baugruppe 10 gegenüber der Längsachse 12 der Einsatz-Baugruppe 8 derart exzentrisch verschoben wird, bis der Mittelpunkt 17 der Meßkugel 9 sich exakt auf der Längsachse 12 der Einsatz-Baugruppe 8 befindet.

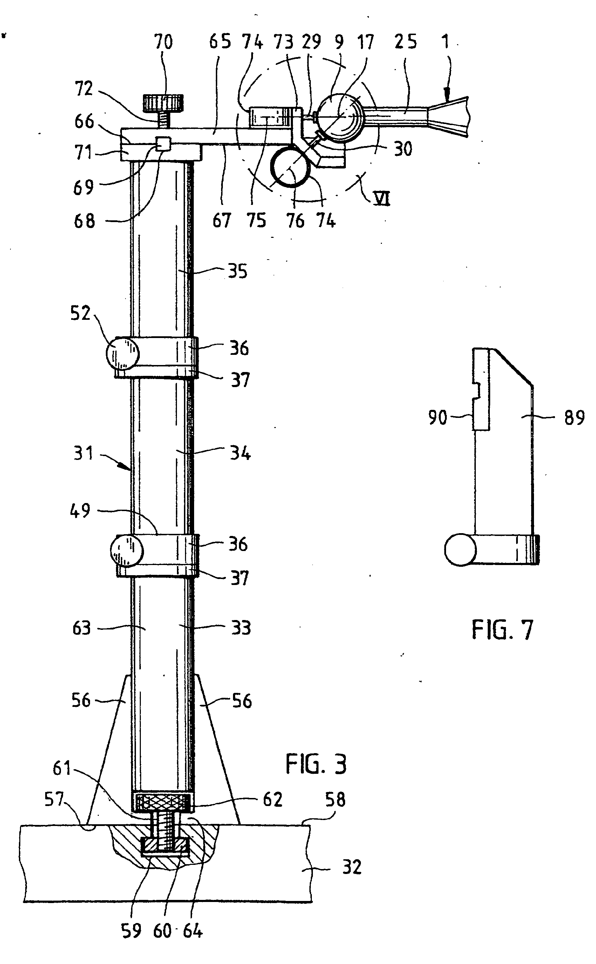

Wie Fig. 3 erkennen läßt, sind die Meßtaster 29, 30 mittels einer Säule 31 an einem Maschinentisch 32 oder dergleichen festgelegt. In der dargestellten Ausführungsform ist die Säule 31 aus drei etwa gleich langen Säulenstücken 33 bis 35 zusammengesetzt, wobei insbesondere das Mittelteil 34 auch weggelassen werden könnte, so daß die Höhe des dem Mittelpunkt 17 der Meßkugel 9 entsprechenden Meßbezugspunktes gegenüber dem Maschinentisch 32 zumindest stufig variiert werden kann.

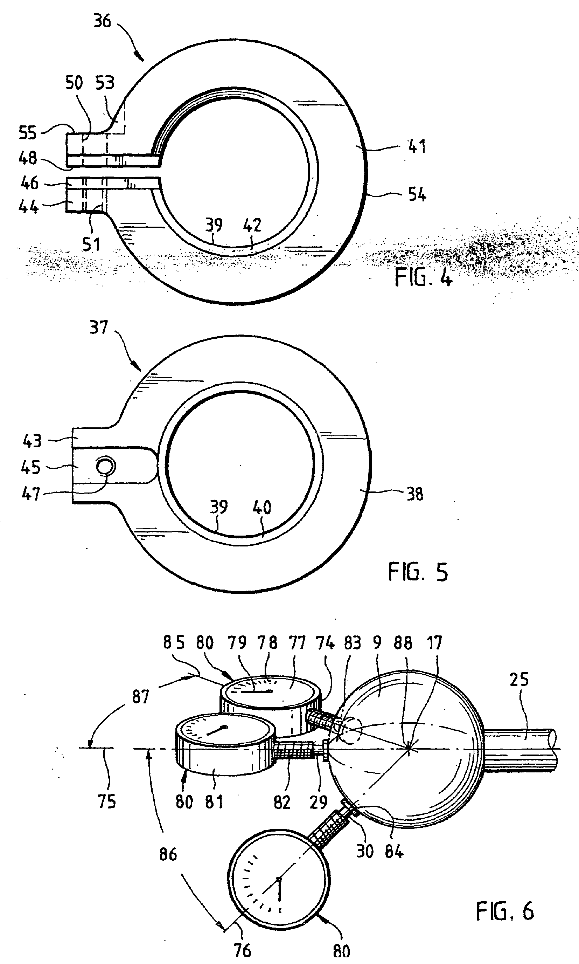

Sämtliche Säulenstücke 33 bis 35 haben einen vorzugsweise zylindrischen Querschnitt und können zwecks Materialersparnis als Hohlkörper, d. h. rohrförmig aufgebaut sein. Die Verbindungselemente 36, 37 zwischen je zwei aneinandergrenzenden Säulenstücken 33, 34 bzw. 34, 35 sind in den Fig. 4 und 5 jeweils in stirnseitiger Ansicht dargestellt. Bei dieser Ausführungsform 31 ist die Oberseite 38 eines Säulenstücks 33, 34 eben abgedreht mit Ausnahme eines im Bereich der Rohrinnenseite 39 an der Stirnseite 38 angeformten, rundumlaufenden Bundes 40. Entsprechend ist die ebenfalls plan abgedrehte Unterseite 41 eines aufzusetzenden Säulenstücks 34, 35 im Bereich der Rohrinnenseite 39 mit einer Auskehlung 42 versehen, in welche der Bund 40 nach Art einer Übergangspassung eingesetzt werden kann. Durch die aneinanderliegenden Stirnseiten 38, 41 der benachbarten Rohrstücke 33, 34 bzw. 34, 35 ergibt sich durch Formschluß eine Justierung der betreffenden Säulenstücke 33 bis 35 mit zueinander paralleler Ausrichtung. Indem hierbei auch der Bund 40 in die Auskehlung 42 eingreift, wird zusätzlich eine koaxiale Ausrichtung bewirkt. Um schließlich auch für einen definierten Relativdrehwinkel zwischen aneinandergesetzten Säulenstücken 33 bis 35 zu sorgen, weisen die Verbindungselemente 36, 37 je einen radialen Fortsatz 43, 44 auf, der an der betreffenden Stirnseite 38, 41 mit einer radial zur Säulenachse gerichteten, nutförmigen Vertiefung 45, 46 versehen ist. In die Nut 45 an der Oberseite 38 des jeweils unteren Säulenstücks 33, 34 kann ein entsprechend geformter Nutstein mit rechteckigem oder quadratischen Querschnitt eingelegt werden. Dieser Nutstein weist an seiner Unterseite eine mit Innengewinde versehene Bohrung, vorzugsweise in Form eines Sacklochs, auf, die mit einer Ausnehmung 47 in dem Fortsatz 43 des Verbindungselements 37 an dem jeweils unteren Säulenstück 33, 34 fluchtet, so daß der Nutstein mit einer die Bohrung 47 durchgreifenden Schraube fixiert werden kann.

Zusätzlich zu der nutförmigen Vertiefung 46 in der Unterseite des jeweils aufzusetzenden Säulenstücks 34, 35 ist an dem radialen Fortsatz 44 dieses Verbindungsteils 36 ein Schlitz 48 vorgesehen, welcher den Fortsatz 44 von dem Boden der nutförmigen Vertiefung 46 bis zu der Oberseite 49 des betreffenden Verbindungsteils 36 durchsetzt. Beide Hälften des geschlitzten Fortsatzes 44 in dem Verbindungsteil 36 sind mit je einer tangentialen Bohrung 50, 51 versehen, welche miteinander fluchten. Eine der Bohrungen 51 verfügt über ein Innengewinde, während die andere Bohrung 50 einen etwas verbreiterten Querschnitt aufweist, um den Schaft einer hindurchgesteckten und in das Gewinde 51 eingeschraubten Schraube 52 mit Spiel umgreifen zu können. Im Bereich des Schraubenkopfs kann dabei eine zusätzliche Aussparung 53 in der Außenseite 54 des Verbindungsteils 36 vorgesehen sein, so daß die Unterseite des Schraubenkopfs vollflächig an der betreffenden Außenseite 55 des radialen Fortsatzes 44 anlegbar ist und durch weiteres Anziehen der Schraube eine Annäherung der beiden Hälften des Fortsatzes 44 herbeiführt. Dabei klemmen die Nuthälften 46 den in die Nutvertiefung 45 des anderen Säulenteils 33, 34 eingelegten Nutstein zwischen sich ein, so daß einerseits ein drehwinkelmäßiger Formschluß zwischen den beiden ineinandergesteckten Säulenteilen 33, 34 bzw. 34, 35 entsteht und andererseits die betreffenden Säulen 33 bis 35 reibschlüssig aneinander festgelegt werden.

Wie Fig. 3 weiter zu entnehmen ist, sind an dem Säulensockelteil 33 etwa radial zu der Säulenlängsachse verlaufende Flügel 56 angesetzt, beispielsweise angeschweißt, deren Unterseiten 57 derart plan abgeschliffen sind, daß sie bündig auf der Oberseite 58 des Maschinentischs 32 aufgesetzt werden können und dabei für eine exakt lotrechte Ausrichtung des Säulensockels 33 und damit der gesamten Säule 31 sorgen. Zu diesem Zweck genügt es bereits, wenn drei um jeweils 120° gegeneinander versetzte Flügel 56 vorgesehen sind, es ist jedoch auch denkbar, beispielsweise vier Flügel 56 verwenden.

Zur Fixierung des Säulensockels 33 an dem Maschinentisch 32 wird bevorzugt eine von mehreren, querschnittlich T-förmig ausgestalteten Nuten 59 in der Oberseite 58 des Maschinentischs 32 verwendet. In dieser T-Nut 59 kann von einer stirnseitigen Öffnung an dem Rand des Maschinentischs 32 her ein Nutstein 60 eingeschoben werden, dessen Breite etwa dem hinterschnittenen Bereich der Nut 59 entspricht, so daß er nicht nach oben aus der Nut 59 heraustreten kann. Dieser Nutstein 60 weist eine vertikale Gewindebohrung auf, in die eine Schraube 61 eingeschraubt werden kann.

Um Platz für den Kopf 62 der Schraube 61 zu schaffen, endet der Rohrmantel 63 des Säulensockelteils 33 oberhalb der Standfläche 57 der Radialflügel 56. Gleichzeitig sind diese Flügel 56 im Bereich ihrer unterseitigen Kante 57 mit nach innen vorspringenden Fortsätzen 64 versehen, die von dem Schraubenkopf 62 übergriffen werden können. Beim Anziehen der Schraube 61, deren Kopf 62 beispielsweise mit einer randseitigen Rändelung versehen sein kann, wird einerseits der Nutstein 60 nach oben gezogen, bis er an der schulterförmigen Hinterschneidung der Nut 59 anliegt, sodann wird gleichzeitig der Schraubenkopf 62 beim weiteren Festziehen nach unten gepreßt, bis dadurch die Flügel 56 unverrückbar an der Oberseite 58 des Maschinentischs 32 festgeklemmt sind.

Die Meßtaster 29, 30 sitzen an einem horizontal verlaufenden Tragarm 65, der auf der Oberseite 66 des obersten Säulenstücks 35 radial auskragend fixiert wird. Zu diesem Zweck ist in der Oberseite 66 dieses Säulenteils 35 wie auch im rückwärtigen Bereich der Unterseite 67 des Tragarms 65 je eine querverlaufende Nut 68 eingearbeitet, in welche ein gemeinsamer Nutstein 69 eingelegt werden kann, um Querbewegungen des Tragarms 65 gegenüber der Säule 31 zu vermeiden. Schließlich wird der Tragarm 67 mittels einer Schraube 70 an der Oberseite 66 der Säule 31 festgeklemmt. Zu diesem Zweck ist die als Abschlußplatte 71 ausgebildete Oberseite 66 der Säule 31 mit einen zentralen Gewindebohrung versehen, die mit einer entsprechenden Bohrung in dem Tragarm 65 fluchtet und dem Einschrauben der zu der Säulenachse koaxialen Klemmschraube 70 dient. Zum Durchtritt der Klemmschraube 70 durch den Nutstein 69 kann dieser entweder mit einer entsprechenden Bohrung versehen sein, oder anstelle eines einzigen Nutsteins 69 werden zwei voneinander beabstandete Nutsteine verwendet, zwischen denen Platz zum Durchtritt des Schraubenschafts 72 verbleibt. Nach Festziehen der Klemmschraube 70 ist der Tragarm 65 in allen Raumrichtungen unbeweglich an dem Maschinentisch 32 festgelegt.

An dem vorderen oder freien Ende des Tragarms 65 ist eine Halterung 73 für die Gehäuse 74 der Meßtaster 29, 30 angeformt oder festgelegt, insbesondere angeschweißt oder angeschraubt. Die Halterung 73 weist vorzugsweise mehrere plattenförmige Abschnitte auf, deren Ebenen exakt lotrecht zu der gewünschten Meßrichtung 75, 76 des betreffenden Meßtasters 29, 30 verlaufen.

Wie Fig. 6 zeigt, entspricht das Gehäuse 74 für einen Meßtaster 29, 30 einer flachen, zylindrischen Scheibe ähnlich einem Uhrgehäuse. Durch eine stirnseitige Glasabdeckung 77 ist sowohl eine Skala 78 wie auch der Zeiger 79 der betreffenden Meßuhr 80 ablesbar. An dem Mantel 81 einer Meßuhr 80 befindet sich ein den betreffenden Meßtaster 29, 30 umschließender Fortsatz 82, der mit einem Außengewinde versehen ist. Mit Hilfe dieses Gewindefortsatzes 82 kann die betreffende Meßuhr 80 an der Halterung 73 fixiert werden, indem der Fortsatz 82 durch eine entsprechende Ausnehmung der Halterung 73 hindurchgesteckt, gegebenenfalls in ein Gewinde derselben eingeschraubt, und/oder mit einem Konterelement fixiert wird.

Wie Fig. 6 weiter erkennen läßt, existieren insgesamt drei Meßuhren 80 mit je einem Meßtaster 29, 30, 83. Jeder Meßtaster 29, 30, 83 ist an seinem vorderen Ende mit einer tellerartigen Verbreiterung 84 versehen, damit auch bei einer leichten Verschiebung der Meßkugel 9 lotrecht zu der betreffenden Meßrichtung 75, 76, 85 das zugeordnete Meßergebnis nicht verfälscht wird.

Wie aus Fig. 6 weiter hervorgeht, schließen die Meßrichtungen 75, 76 zweier Meßtaster 29, 30 einen Winkel 86 von 45° ein. Diese beiden Meßrichtungen 75, 76 liegen bei Fig. 6 in der Zeichenebene. Gegenüber dieser Ebene ist die Meßrichtung 85 des dritten Meßtasters 83 um einen Winkel 87 von ebenfalls 45° versetzt, und zwar derart, daß sich alle drei Meßrichtungen 75, 76, 85 in einem gemeinsamen Punkt 88 schneiden.

Sofern sich der Mittelpunkt 17 der Meßkugel 9 beim Anfahren des betreffenden Bezugspunktes exakt in dem Schnittpunkt 88 aller Meßrichtungen 75, 76 85 befindet, entsprechen die Auslenkungen sämtlicher Meßtaster 29, 30, 83 und damit sämtliche Meßergebnisse exakt dem Radius der Kugel 9, gegebenenfalls vermindert um einen Offsetwert, der durch den Abstand der Nullpositionen der Meßtaster 29, 30, 83 von dem Schnittpunkt 88 der Meßrichtungen 75, 76, 85 bedingt ist.

Gelingt es infolge eines Positionierfehlers der Werkzeugmaschine nicht, bei dem Anfahren des gewünschten Bezugspunktes den Mittelpunkt 17 der Meßkugel 9 mit dem Schnittpunkt 88 der Meßtasterrichtungen 75, 76, 85 zur Deckung zu bringen, so zeigen die Meßuhren 80 unterschiedliche Ergebnisse an. Da die Meßuhren 80 gegenseitige Winkel 86, 87 von jeweils 45° einschließen, entsprechen die dabei abgelesenen Werte nicht den X-, Y- und Z-Koordinaten des Verschiebungsvektors zwischen dem Meßmittelpunkt 88 und dem Kugelmittelpunkt 17. Aufgrund trigonometrischer Berechnungen ist es jedoch ohne weiteres möglich, aus den drei voneinander linear unabhängigen Meßergebnissen der Meßuhren 80 die X-, Y- und Z-Werte dieses Verschiebevektors zu berechnen und damit die in die Steuerung der Werkzeugmaschine einzuspeichernden Korrekturwerte zu ermitteln.

Diese Umrechnung und Einspeicherung kann auch selbsttätig erfolgen, indem anstelle der mechanischen Meßuhren 80 elektronische Meßuhren verwendet werden, bei denen die Meßtaster 29, 30, 83 mit je einem mechanisch-elektrischen Wandler gekoppelt sind, der ein zu der Auslenkung des betreffenden Tasters 29, 30, 83 proportionales Ausgangssignal liefert. Je nach Ausführungsform des Meßwandlers kann dabei ein analoges oder ein digitales Ausgangssignal erzeugt werden. Indem ein analoges Ausgangssignal gegebenenfalls digitalisiert wird, kann der so gewonnene Meßwert einer Meßuhr 80 direkt über einen Dateneingang in die Steuerung der Werkzeugmaschine eingegeben und von dieser unter einer zugeordneten Speicheradresse abgelegt werden.

Anstelle von 45°-Winkeln 86, 87 können auch andere Winkel verwendet werden. Es empfiehlt sich jedoch, diese Winkel nicht zu groß zu halten, damit der Bewegungsspielraum der Werkzeugmaschine durch die Säule 31, den Tragarm 65, Halterung 73 und Meßuhren 80 möglichst wenig beeinträchtigt wird.

Wenn die Höhe des Bezugspunktes 88 gegenüber dem Maschinentisch 32 noch vergrößert werden soll, kann anstelle des obersten Säulenteils 35 das in Fig. 7 dargestellte Säulenstück 89 verwendet werden, bei welchem die Anschlußfläche 90, welche in ihrer Oberflächen-Topographie der Oberseite 66 des Säulenoberteils 35 entspricht, vertikal ausgerichtet ist, so daß der Tragarm 65 nach seiner Montage ebenfalls vertikal nach oben weist.

## Patentansprüche

1. Vorrichtung (1,31) zum Ermitteln von Korrekturparametern für die Werkzeug-Koordinaten von CNC-gesteuerten Bearbeitungsmaschinen, mit einem in die Werkzeugaufnahme der Maschine einsetzbaren Meßkopf (1) mit einer Meßkugel (9), und mit einer an dem Maschinentisch (32), -bett od. dgl. festlegbare Meßeinrichtung (31), wobei die Meßeinrichtung (31)
a)drei Meßtaster (29,30,83) zur Anlage an der Meßkugel (9) aufweist,
b) welche in jeweils unterschiedlichen Meßrichtungen (75,76,85) orientiert sind
c) und deren Tastelemente gegen rückstellende Federkräfte aus ihrer Nullposition auslenkbar sind,
**dadurch gekennzeichnet, dass**
die Meßrichtungen (75,76) wenigstens zweier Meßtaster (29,30) einen spitzen Winkel (86) untereinander einschließen

2. Vorrichtung nach Anspruch 1, **dadurch gekennzeichnet, dass** die Tastelemente der einzelnen Meßtaster (29,30,83) mechanisch nicht miteinander gekoppelt sind.

3. Vorrichtung nach Anspruch 1, **dadurch gekennzeichnet, dass** die beiden Meßtaster (29,30) einen spitzen Winkel (86) von etwa 45° untereinander einschließen.

4. Vorrichtung nach einem der vorherigen Ansprüche , **dadurch gekennzeichnet, dass** die Meßrichtung (85) des dritten Meßtasters (83) außerhalb der durch die übrigen beiden Meßrichtungen (75,76) aufgespannten Ebene liegt.

5. Vorrichtung nach Anspruch 4, **dadurch gekennzeichnet, dass** die Meßrichtung (85) des dritten Meßtasters (83) mit der von den übrigen beiden Meßrichtungen (75,76) aufgespannten Ebene einen Winkel (87) von etwa 45° einschließt.

6. Vorrichtung nach einem der vorhergehenden Ansprüche, **dadurch gekennzeichnet, dass** die Tastelemente der Meßtaster (29,30,83) verbreiterte, vorzugsweise tellerartige Meßköpfe (84) aufweisen, deren Vorderseiten lotrecht zu der jeweiligen Meßrichtung (75,76,85) orientiert sind.

7. Vorrichtung nach einem der vorhergehenden Ansprüche, **dadurch gekennzeichnet, dass** die Meßtaster (29,30,83) mit ihrem Gehäuse an einem gemeinsamen Tragelement (65,73) angeordnet sind.

8. Vorrichtung nach Anspruch 7, **dadurch gekennzeichnet, dass** das Tragelement (65,73) über eine Säule (31) od. dgl. mit dem Maschinentisch (32), -bett od. dgl. verbindbar ist.

9. Vorrichtung nach Anspruch 8 **dadurch gekennzeichnet, dass** die (31) Säule aus mehreren Teilen (33-35) zusammensetzbar ist.

10. Vorrichtung nach Anspruch 9 **dadurch gekennzeichnet, dass** die Säulenteile (33-35) unverdrehbar und in Axialrichtung unverschiebbar aneinander festlegbar sind.

11. Vorrichtung nach einem der vorhergehenden Ansprüche, **dadurch gekennzeichnet, dass** die Meßkugel (9) aus gehärtetem Metall besteht.

12. Vorrichtung nach Anspruch 11, **dadurch gekennzeichnet, dass** die Meßkugel (9) eine vorzugsweise erodierte, radial gerichtete, querschnittlich vorzugsweise zylindrische Ausnehmung (27) zum Einsetzen eines Tragbolzens (25) aufweist.

13. Vorrichtung nach Anspruch 12, **dadurch gekennzeichnet, dass** der Tragbolzen (25) in die radiale Ausnehmung (27) der Meßkugel (9) eingeklebt ist.

14. Vorrichtung nach einem der vorhergehenden Ansprüche, **dadurch gekennzeichnet, dass** zwischen der Meßkugel (9) bzw einem Tragbolzen (25) und dem in die Werkzeugaufnahme einsetzbaren Ende (8) des Meßkopfs (1) eine Justiervorrichtung angeordnet ist.

## Claims

1. Device (1, 31) for determining compensation parameters for the tool coordinates of CNC controlled machining machines, with a measuring head (1) which can be inserted in the tool-receiving socket of the machine and has a measuring ball (9), and with a measuring device (31) which can be fixed to the work table (32), machine bed or similar, wherein the measuring device (31) comprises
a) three measuring styluses (29, 30, 83) for applying to the measuring ball (9),
b) which styluses are in each case oriented in different measuring directions (75, 76, 85)
c) and the sensing elements of which can be deflected out of their zero position against restoring spring forces,
**characterised in that**
the measuring directions (75, 76) at least of two measuring styluses (29, 30) form an acute angle (86) with one another.

2. Device according to Claim 1, **characterised in that** the sensing elements of the individual measuring styluses (29, 30, 83) are not mechanically coupled together.

3. Device according to Claim 1, **characterised in that** the two measuring styluses (29, 30) form an acute angle (86) of approximately 45° with one another.

4. Device according to any one of the preceding Claims, **characterised in that** the measuring direction (85) of the third measuring stylus (83) lies outside of the plane which is spanned by the other two measuring directions (75, 76).

5. Device according to Claim 4, **characterised in that** the measuring direction (85) of the third measuring stylus (83) forms an angle (87) of approximately 45° with the plane which is spanned by the other two measuring directions (75, 76).

6. Device according to any one of the preceding Claims, **characterised in that** the sensing elements of the measuring styluses (29, 30, 83) comprise widened, preferably plate-like measuring heads (84), the front sides of which are oriented perpendicularly to the respective measuring direction (75, 76, 85).

7. Device according to any one of the preceding Claims, **characterised in that** the measuring styluses (29, 30, 83) are disposed with their housing on a common supporting element (65, 73).

8. Device according to Claim 7, **characterised in that** the supporting element (65, 73) can be connected to the work table (32), machine bed or similar via a column (31) or similar.

9. Device according to Claim 8, **characterised in that** the column (31) is composed of a plurality of parts (33 - 35).

10. Device according to Claim 9, **characterised in that** the column parts (33 - 35) can be fixed to one another so as to be not-rotatable and non-displaceable in the axial direction.

11. Device according to any one of the preceding Claims, **characterised in that** the measuring ball (9) consists of hardened metal.

12. Device according to Claim 11, **characterised in that** the measuring ball (9) comprises a preferably eroded, radially directed recess (27), preferably of a cylindrical cross section, for inserting a supporting pin (25).

13. Device according to Claim 12, **characterised in that** the supporting pin (25) is glued into the radial recess (27) of the measuring ball (9).

14. Device according to any one of the preceding Claims, **characterised in that** an adjusting device is disposed between the measuring ball (9) or a supporting pin (25) and the end (8) of the measuring head (1) which can be inserted in the tool-receiving socket.

## Revendications

1. Dispositif (1, 31) pour déterminer des paramètres de correction des coordonnées d'un outil sur des machines d'usinage à commande numérique par ordinateur, comprenant une tête de mesure (1) insérable dans le porte-outil de la machine et munie d'une boule de mesure (9), ainsi qu'un système de mesure (31) pouvant être fixé à la table (32), au sommier ou à une partie analogue de la machine, le système de mesure (31)
a) présentant trois palpeurs de mesure (29, 30, 83) destinés à venir se placer en appui contre la boule de mesure (9),
b) qui sont orientés dans des directions de mesure (75, 76, 85) respectives différentes
c) et dont les organes de palpage peuvent être déviés de leur position zéro à l'encontre des forces de ressorts de rappel,
**caractérisé en ce que**
les directions de mesure (75, 76) d'au moins deux palpeurs de mesure (29, 30) forment entre elles un angle aigu (86).

2. Dispositif selon la revendication 1, **caractérisé en ce que** les organes de palpage des différents palpeurs de mesure (29, 30, 83) ne sont pas accouplés mécaniquement les uns aux autres.

3. Dispositif selon la revendication 1, **caractérisé en ce que** les deux palpeurs de mesure (29, 30) forment entre eux un angle aigu (86) d'environ 45°.

4. Dispositif selon l'une des revendications précédentes, **caractérisé en ce que** la direction de mesure (85) du troisième palpeur de mesure (83) se situe hors du plan sous-tendu par les deux autres directions de mesure (75, 76).

5. Dispositif selon la revendication 4, **caractérisé en ce que** la direction de mesure (85) du troisième palpeur de mesure (83) forme un angle (87) d'environ 45° avec le plan sous-tendu par les deux autres directions de mesure (75, 76).

6. Dispositif selon l'une des revendications précédentes, **caractérisé en ce que** les organes de palpage des palpeurs de mesure (29, 30, 83) présentent des têtes de mesure (84) élargies, de préférence semblables à des disques, dont les faces frontales sont orientées perpendiculairement à la direction de mesure (75, 76, 85) respectivement considérée.

7. Dispositif selon l'une des revendications précédentes, **caractérisé en ce que** les palpeurs de mesure (29, 30, 83) sont disposés, par leur corps, sur un organe de support (65, 73) commun.

8. Dispositif selon la revendication 7, **caractérisé en ce que** l'organe de support (65, 73) peut être relié à la table (32), au sommier ou à une partie analogue de la machine par l'intermédiaire d'un montant (31).

9. Dispositif selon la revendication 8, **caractérisé en ce que** le montant (31) peut être composé de plusieurs éléments (33 à 35).

10. Dispositif selon la revendication 9, **caractérisé en ce que** les éléments (33 à 35) du montant peuvent être fixés les uns aux autres en étant bloqués en rotation et immobilisés en translation dans la direction axiale.

11. Dispositif selon l'une des revendications précédentes, **caractérisé en ce que** la boule de mesure (9) est constituée de métal durci.

12. Dispositif selon la revendication 11, **caractérisé en ce que** la boule de mesure (9) présente un évidement (27) de préférence érodé, dirigé radialement, de préférence cylindrique en coupe transversale, pour l'insertion d'un axe de support (25).

13. Dispositif selon la revendication 12, **caractérisé en ce que** l'axe de support (25) est collé à l'intérieur de l'évidement radial (27) de la boule de mesure (9).

14. Dispositif selon l'une des revendications précédentes, **caractérisé en ce qu'**entre la boule de mesure (9) ou un axe de support (25) et l'extrémité (8), insérable dans le porte-outil, de la tête de mesure (1), est disposé un dispositif d'ajustement.
